# EUROPÄISCHE PATENTSCHRIFT

(11) **EP 3 433 049 B1**
(45) Veröffentlichungstag und Bekanntmachung des Hinweises auf die Patenterteilung: **29.06.2022**
(21) Anmeldenummer: 17713189.3
(22) Anmeldetag: 15.03.2017
(51) Int. Cl.: B23K 26/70, B23K 37/04, B23K 26/38

(54) **BEARBEITUNGSMASCHINE ZUM TRENNENDEN BEARBEITEN EINES PLATTENFÖRMIGEN WERKSTÜCKS**
PROCESSING MACHINE FOR CUTTING PLATE-SHAPED WORKPIECES
MACHINE DE TRAITEMENT POUR COUPER DES PIÈCES EN FORME DE PLAQUE

(30) Priorität: 22.03.2016 DE 102016105374
(43) Veröffentlichungstag der Anmeldung: 30.01.2019
(73) Patentinhaber: Trumpf Werkzeugmaschinen GmbH + Co. KG, 71254 Ditzingen (DE)
(72) Erfinder: AUTENRIETH, Julian, 71229 Leonberg (DE); DISTLER, Sebastian, 89520 Heidenheim (DE); HERZOG, Johannes, 76676 Graben-Neudorf (DE); OTTNAD, Jens, 76199 Karlsruhe (DE); SAUMER, Katja, 82380 Peißenberg (DE); SCHNEIDER, Stefan, 71229 Leonberg (DE); SCHUHMACHER, Johannes, 74673 Mulfingen (DE); STEMMLER, Andreas, 97877 Wertheim (DE); WANTZEN, Knut, 76131 Karlsruhe (DE)
(74) Vertreter: Patentanwälte Mammel und Maser PartG mbB
(86) Internationale Anmeldenummer: PCT/EP2017/056103
(87) Internationale Veröffentlichungsnummer: WO 2017/162497

(56) Entgegenhaltungen:
- EP-A1- 2 926 941
- DE-A1-102011 010 152
- US-B2- 7 087 858
- Anonymous: "Home | CCS-Conveyor Cleaning Systems GmbH", , 13. März 2016 (2016-03-13), XP055386676, Gefunden im Internet: URL:http://web.archive.org/web/20160313082 335/http://ivs-powerclean.de/ [gefunden am 2017-06-29]

## Beschreibung

Die Erfindung betrifft eine Bearbeitungsmaschine zum trennenden Bearbeiten eines auf einer Werkstückauflage gelagerten plattenförmigen Materials.

Aus der US 7,087,858 B2 ist eine Laserschneidmaschine bekannt, die eine Bearbeitungsstation umfasst, welche von einer Umhausung umgeben ist. Zum Ausschleusen bearbeiteter Werkstücke werden diese durch eine Öffnung in der Umhausung auf einer Palette herausgeführt. Außerhalb der Umhausung wird die Palette auf einem Grundgestell einer Beund Entladestation positioniert, so dass daraufhin die einzelnen auf der Palette aufliegenden bearbeiteten Werkstücke beziehungsweise Werkstücke entladen werden können.

Das Entladen solcher auf der Palette aufliegenden Werkstücke erfolgt zumeist manuell. Dabei wird benachbart zum Grundgestell der Palette ein Transportwagen oder eine Holzpalette oder ein Behälter positioniert, so dass die Werkstücke von der Palette entnommen und auf diesem Transportwagen oder der Holzpalette oder in dem Behälter abgelegt werden. Da die aufnehmenden Vorrichtungen entweder hinter oder seitlich des Werkers positioniert sind, muss der Werker eine Drehbewegung vornehmen, um den Ablageort zu erreichen. Das Ablegen von solchen Werkstücken ist zumeist mit großen Laufwegen verbunden, insbesondere ist dies bei schwereren Werkstücken erschwert. Zudem ist die Erreichbarkeit der Werkstücke aus der Mitte der Werkstückauflage der Palette erschwert.

Der Erfindung liegt die Aufgabe zugrunde, eine Bearbeitungsmaschine vorzuschlagen, welche ein erleichtertes manuelles Entnehmen von bearbeiteten Werkstücken und/oder Restgitterteilen von einer Werkstückauflage ermöglicht.

Diese Aufgabe wird durch eine in einer Bearbeitungsmaschine gemäß dem Anspruch 1, in die eine Werkstückauflage der Bearbeitungsmaschine bewegbar ist, vorgesehenen Absortiervorrichtung gelöst, welche sich zumindest teilweise über die Werkstückauflage erstreckt und zumindest teilweise entlang der Werkstückauflage verfahrbar ist. Diese Absortiervorrichtung weist den Vorteil auf, dass der Werker die bearbeiteten Werkstücke von der Werkstückauflage lediglich anheben und auf die unmittelbar neben sich positionierte Absortiervorrichtung auflegen kann. Dadurch können Drehbewegungen und/oder große Laufwege des Werkers beim Entladen der Werkstücke von der Werkstückauflage entfallen oder zumindest deutlich reduziert werden. Durch die verfahrbare Absortiervorrichtung entlang der Werkstückauflage der Palette kann diese durch den Werker von Hand immer unmittelbar benachbart zu seiner Entladesposition verfahren werden, so dass kurze Handhabungswege ermöglicht sind. Zusätzlich unterstützt eine solche Absortiervorrichtung den Werker bei der Entnahme von Werkstücken aus der Mitte der Ablagefläche, wenn sich der Werker dabei an der Absortiervorrichtung aufstützen kann.

Die Absortiervorrichtung gemäß der Erfindung weist eine Brücke auf, welche die Werkstückauflage überspannt und von zwei jeweils an einer Seite der Brücke angeordneten Fahrwerken getragen ist und eine Ablagefläche für bearbeitete Werkstücke aufnimmt. Durch die als Brücke ausgebildete Absortiervorrichtung ist ein einfacher und konstruktiver Aufbau für die Absortiervorrichtung gegeben.

Wenn die das plattenförmige Material lagernde Werkstückauflage an einer Palette ausgebildet ist, welche zwischen einer Bearbeitungsstation der Bearbeitungsmaschine und einer Be- und Entladestation verfahrbar ist, kann die als Brücke ausgebildete Absortiervorrichtung die Werkstückauflage der Palette überspannen, so dass von beiden Längs- oder Schmalseiten der Palette eine Entladung der Palette erfolgen kann. Auf diese Weise sind gleiche Arbeitsbedingungen auf zwei Seiten der Palette gegeben.

Des Weiteren weist bevorzugt das Fahrwerk der Absortiervorrichtung zumindest Laufrollen oder Gleitelemente auf. Dies ermöglicht eine kraftsparende Verfahrbewegung der Absortiervorrichtung zur Entladeposition. Zudem ist dies geräuscharm und stellt eine kostengünstige Lösung dar. Des Weiteren weist bevorzugt zumindest ein Laufwerk eine Bremsvorrichtung auf, welche vorzugsweise mit einem Handlauf, der entlang einer Seitenfläche der Brücke angeordnet ist, oder einem Bremshebel an der Brücke betätigbar ist. Die Betätigung der Bremsvorrichtung mit dem Handlauf weist den Vorteil auf, dass beim Einleiten einer Verschiebebewegung der Absortiervorrichtung der Handlauf ergriffen und mit einer Schwenk- oder Hubbewegung betätigt wird, so dass gleichzeitig die Bremse gelöst wird. Das Betätigen der Bremse und das Verfahren der Absortiervorrichtung erfolgen mit einer Handbewegung. Die Bremsvorrichtung kann so ausgeführt sein, dass, sobald der Handlauf von dem Werker losgelassen wird, die Bremsvorrichtung selbständig in eine Bremsposition übergeht. Dadurch kann die Absortiervorrichtung, insbesondere beim Auflegen von schweren Werkstücken auf der Brücke, nicht versehentlich verfahren werden. Alternativ kann die Bremsvorrichtung auch so ausgeführt sein, dass beim Herunterdrücken bzw. -schwenken des Handlaufs die Bremse betätigt und beim Loslassen gelöst wird. Diese Ausführung weist den Vorteil auf, dass sich der Werker auf dem Handlauf abstützen kann, ohne dass die Brücke dadurch bewegt wird.

Alternativ kann die Bremsvorrichtung durch einen separaten Bremshebel an der Brücke betätigt und gelöst werden. Dabei wird die Bremse bei Bedarf durch eine Handbewegung geöffnet und durch eine weitere Handbewegung wieder geschlossen. Bei geöffneter Bremse kann die Brücke in einfacher Weise von Hand verfahren werden.

Vorzugsweise blockiert die Bremsvorrichtung in einer Bremsposition zumindest eine Laufrolle oder Gleitelemente des Fahrwerks mit zumindest einer Bremsbacke.

Die Palette ist bevorzugt von einem Grundgestell der Be- und Entladestation, insbesondere vom Grundgestell eines Palettenwechslers, verfahrbar aufgenommen, und die Absortiervorrichtung ist auf oder entlang mindestens einer Führungsschiene geführt verfahrbar. Dadurch ist die Palette unabhängig von der Positionierung der Absortiervorrichtung in und aus der Bearbeitungsstation verfahrbar. Darüber hinaus ist das Grundgestell mit Ausnahme der Anschlussseite zur Bearbeitungsstation frei zugänglich.

Bevorzugt ist mindestens eine Führungsschiene auf dem Grundgestell benachbart zur Palette vorgesehen. Dadurch kann eine einfache Anordnung gegeben sein und eine vollständige Zugänglichkeit zum Grundgestell aufrechterhalten bleiben. Alternativ kann die Palette mindestens eine Führungsschiene aufweisen, auf oder entlang welcher die Absortiervorrichtung verfahrbar ist. Eine weitere Alternative sieht vor, dass im Boden benachbart zum Grundgestell mindestens eine Führungsschiene eingebracht ist, so dass die Absortiervorrichtung auf bzw. entlang der oder den am Boden vorgesehenen Führungsschienen verfahrbar aufgenommen und mittels der Brücke die Werkstückauflage der Palette überspannt ist.

Des Weiteren ist die Ablagefläche der Brücke bevorzugt durch einen sich zumindest teilweise entlang der Längsseite der Ablagefläche erstreckenden und gegenüber der Ablagefläche erhöhten Rand begrenzt. Bevorzugt sind die Längsseiten und die Eckbereiche mit dem erhöhten Rand versehen. Zusätzlich können an den Schmalseiten der Ablagefläche zumindest abschnittsweise erhöhte Randbereiche vorgesehen sein. Dies ermöglicht zum einen eine Sicherung der auf der Ablagefläche abgelegten Werkstücke als auch beispielsweise die Aufnahme von darauf aufgesetzten Transportpaletten (Holzpaletten), Behältern oder sonstigen Transportauflagen. Zusätzlich dient der erhöhte Rand als Handgriff, um die Absortiervorrichtung manuell zu verfahren. Dazu weist der erhöhte Rand vorzugsweise eine gerundete oder umgebogene Kante oder einen Kantenschutz an seiner Oberseite auf.

Die Ablagefläche kann unmittelbar an der Brücke angebracht sein. Dadurch kann die Absortiervorrichtung zusammen mit dem Fahrwerk in einfacher Weise als ein Wagen ausgebildet werden. Alternativ kann die Brücke der Absortiervorrichtung eine Auflage für zu entnehmende Werkstücke aufnehmen, welche sich entlang der Brücke erstreckt und auswechselbar an der Brücke gelagert ist. Dadurch kann beispielsweise eine Auflage für eine bestimmte Anzahl von Werkstücken oder eine bestimmte Ausrichtung der Werkstücke auf der Ablagefläche eingesetzt werden sowie eine volle Werkstückauflage entnommen und eine neue Auflage auf die Brücke aufgesetzt werden, um das Absortieren fortzuführen oder für die nächste Palette mit darauf aufliegenden und bearbeiteten Werkstücken vorzubereiten. Die Auflage der Absortiervorrichtung kann in einer einfachen Ausführungsform als eine Auflageplatte ausgebildet sein, welche vorzugsweise lagegesichert auf der Brücke aufliegt. Alternativ kann die Auflage auch als eine Rollenbahn ausgebildet sein. Dies ermöglicht insbesondere bei schweren Werkstücken darauffolgend eine vereinfachte Entnahme der Werkstücke von der Rollenbahn beispielsweise auf einen Transportwagen.

Es können alternativ in der Auflage Rollen eingelassen sein, die durch einen Hebel nur bei Bedarf aus der Auflagefläche heraus hochgedrückt werden und dann ein Verschieben einer Holzpalette, eines Behälter, etc. ermöglichen. In einer weiteren Alternative können die Rollen der Rollenbahn permanent blockiert sein und die Blockierung bei Bedarf gelöst werden.

Wenn die Brücke bezüglich deren Längserstreckung um 90° versetzt zur Längserstreckung der Palette ausgerichtet ist, ist die Brücke relativ schmal im Verhältnis zur Länge der Palette, so dass eine gute Zugänglichkeit für die gesamte Werkstückauflage der Palette zum Entnehmen der Werkstücke gegeben ist.

In einer Weiterbildung kann seitlich an der Brücke und benachbart zur Auflagefläche, insbesondere außerhalb der Auflagefläche, ein Teilebehälter, Transportbehälter oder Klemmvorrichtungen (Halteclipse) für Hilfsmittel und Werkzeug (z.B. Handschuhe, Hammer, Magnet, etc.) angebracht sein. Auf diese Weise hat der Werker das zum Absortieren von Werkstückteilen benötigte Werkzeug immer griffbereit.

Zur einfachen Entnahme zumindest der Auflage der Absortiervorrichtung oder der Absortiervorrichtung als Ganzes kann die Bearbeitungsmaschine einen Transportwagen aufweisen, der an einer freien Stirnseite der Bearbeitungsmaschine oder der Be- und Entladestation positionierbar ist und genügend große Abmessungen aufweist, so dass die Absortiervorrichtung auf den Transportwagen überführbar oder die Auflage darauf umsetzbar ist.

Eine vorteilhafte Weiterbildung der Bearbeitungsmaschine sieht am Maschinengrundgestell oder an einem der Bearbeitungsstation gegenüberliegenden Ende der Be- und Entladestation zumindest ein Ablagepodest mit wenigstens zwei Auflageelementen vor, welche in Verlängerung zu den auf dem Grundgestell der Bearbeitungsmaschine oder der Be- und Entladestation angeordneten Laufflächen für die Absortiervorrichtung bzw. Führungsschiene(n) ausgerichtet sind und insbesondere eine Länge aufweisen, so dass die Absortiervorrichtung außerhalb der Werkstückauflage positionierbar und von den Auflageelementen aufgenommen ist. Dadurch kann beispielsweise in der Bearbeitungsmaschine die Bearbeitung ungehindert erfolgen oder nach der Entnahme der Werkstücke von der Palette ein verbleibendes Restgitter entnommen werden. Zudem kann die Zykluszeit verkürzt werden, indem nach dem Überführen der Absortiervorrichtung auf das Ablagepodest bereits ein nicht bearbeitetes plattenförmiges Material auf die Werkstückauflage aufgelegt werden kann, um darauffolgend einen neuen Bearbeitungszyklus zu starten.

Die Auflageelemente des Ablagepodestes sind bevorzugt schwenkbar, klappbar oder einschiebbar am Grundgestell der Bearbeitungsmaschine oder der Be- und Entladevorrichtung angeordnet und aus einer parallel zur Stirnseite des Grundgestells eingeklappten Position oder im Grundgestell eingeschobenen Position in eine ausgeklappte bzw. ausgefahrene Position überführbar, in welcher die Laufflächen der Auflageelemente mit den Laufflächen der Maschine oder Be- und Entladestation bzw. mit der oder den Führungsschiene(n) fluchten. Dadurch kann bei einem Nichtgebrauch des Ablagepodests ein Einklappen bzw. Einschieben der Auflageelemente erfolgen, so dass ein größerer Freiraum um die Be- und Entladestation herum gegeben ist.

Die Auflageelemente weisen bevorzugt jeweils einen stirnseitigen Anschlag auf, welcher die Lauffläche des Auflageelements in einer ausgeklappten Position begrenzt. Schwenk- bzw. klappbare Auflageelemente weisen auch einen seitlichen Anschlag auf, der im eingeklappten Zustand der Auflageelemente eine Verfahrstrecke der Absortiervorrichtung außerhalb der Werkstückauflage begrenzt. Dadurch wird unabhängig von der Position der Auflageelemente sichergestellt, dass die auf dem Grundgestell der Maschine oder der Be- und Entladevorrichtung geführte Absortiervorrichtung nicht von dem Grundgestell fällt.

Eine weitere vorteilhafte Ausgestaltung der Auflageelemente sieht vor, dass diese höhenverstellbar am Grundgestell der Maschine oder der Beund Entladeeinrichtung angeordnet sind. Dadurch kann beispielsweise ein Transportwagen zwischen den Auflageelementen an der Stirnseite des Grundgestells angrenzend positioniert werden, wodurch darauffolgend die Auflageelemente abgesenkt werden können, um die von der Brücke lösbare Auflage auf dem Transportwagen aufzulegen. Insbesondere bei schweren Werkstücken oder einer voll bestückten Auflage vereinfacht dies die Handhabung.

Die Auflageelemente sind vorteilhafterweise zumindest in einer ausgeklappten Position mit einer lösbaren Rastverbindung gesichert. Dies ermöglicht eine schnelle Umrüstung für den jeweiligen Anwendungsfall und eine einfache Sicherung in der jeweiligen Gebrauchslage.

Die Laufflächen der Auflageelemente können Beläge zum Bremsen einer Auffahrbewegung der Absortiervorrichtung aufweisen. Dadurch kann eine Geschwindigkeit der Absortiervorrichtung mit zunehmendem Auffahren auf die Auflageelemente reduziert werden, so dass diese in einer sanften Weise in eine Endposition auf der Absortiervorrichtung geführt werden können.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
- Figur 1: eine perspektivische Ansicht einer Laserschneidanlage,
- Figur 2: eine perspektivische Ansicht einer Laserschneidmaschine,
- Figur 3: eine perspektivische Ansicht auf eine Be- und Entladestation mit einer Absortiervorrichtung,
- Figur 4: eine perspektivische Ansicht auf die Be- und Entladestation mit einer weiteren Absortiervorrichtung,
- Figur 5: eine schematische Detailansicht des Details "X" in Figur 4,
- Figur 6: eine perspektivische Ansicht der Absortiervorrichtung in Figur 4,
- Figur 7a: eine schematische Detailansicht eines Fahrwerks mit einer Bremsvorrichtung der Absortiervorrichtung gemäß Figur 6,
- Figur 7b: eine schematische Seitenansicht einer alternativen Form einer Bremsvorrichtung der Absortiervorrichtung gemäß Figur 3,
- Figur 8: eine perspektivische Ansicht der Be- und Entladestation gemäß Figur 4 mit einer Positionierung der Absortiervorrichtung auf einem Ablagepodest,
- Figur 9: eine perspektivische Ansicht eines Auflageelementes des Ablagepodestes gemäß Figur 8,
- Figur 10: eine perspektivische Ansicht der Be- und Entladestation mit einer weiteren alternativen Absortiervorrichtung,
- Figur 11: eine perspektivische Ansicht der Be- und Entladestation gemäß Figur 10 in einer ersten Arbeitssituation,
- Figur 12: eine perspektivische Ansicht der Be- und Entladestation gemäß Figur 10 in einer weiteren Arbeitssituation,
- Figur 13: eine perspektivische Ansicht der Be- und Entladestation mit einer weiteren alternativen Absortiervorrichtung,
- Figur 14: eine perspektivische Ansicht der Be- und Entladestation gemäß Figur 13 in einer weiteren Arbeitssituation und
- Figur 15: eine perspektivische Ansicht der Absortiervorrichtung in einer Bearbeitungsmaschine.

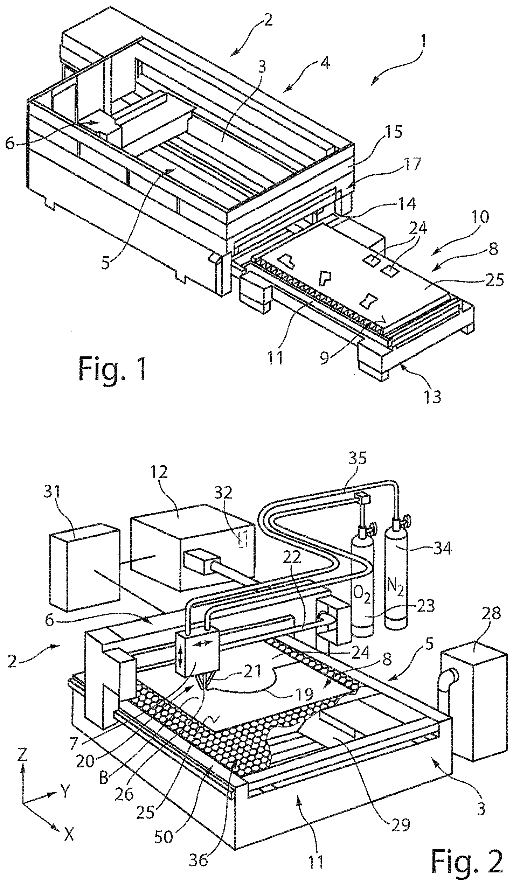

In Figur 1 ist perspektivisch eine Maschine 1 zur trennenden Bearbeitung plattenförmiger Materialien dargestellt. Diese Materialien können aus Metall bestehen. Die Maschine 1 ist im gezeigten Beispiel eine Laserschneidmaschine 2, insbesondere eine Flachbettlasermaschine, welche in Figur 2 im Detail noch erörtert wird. Die Maschine 1 könnte alternativ auch eine Plasmaschneidmaschine oder Stanz-Laser-Kombinationsmaschine umfassen. Die Laserschneidmaschine 2 wird durch eine Umhausung 4 umgeben. Innerhalb der Umhausung 4 ist eine Bearbeitungsstation 5 mit einem Grundgestell 3 vorgesehen sowie eine Schneideinheit 6 mit zumindest einem Bearbeitungskopf 7, insbesondere Laserschneidkopf (Figur 2), der innerhalb einer horizontalen Bewegungsebene verfahrbar ist. Eine solche Umhausung 4 ist nicht notwendig, wenn der Laserschneidkopf 7 einen lokalen, ggf. mitbewegten Strahlschutz aufweist, wie dies beispielsweise an Stanz-Laser-Kombinationsmaschinen der Fall ist. Außerhalb der Umhausung 4 ist eine Be- und Entladestation 10 vorgesehen. Diese umfasst wenigstens eine verfahrbare Palette 11. Vorzugsweise ist diese Be- und Entladestation 10 durch einen sogenannten Palettenwechsler 13 gebildet. Ergänzend und nicht näher dargestellt kann eine Handlingsvorrichtung der Be- und Entladestation 10 zugeordnet sein, durch welche ein plattenförmiges Material 8 in unbearbeiteter Form - also als Rohmaterial - auf die Palette 11 aufgelegt wird, bevor die Palette 11 in die Bearbeitungsstation 5 bewegt wird. Danach erfolgt eine Bearbeitung des plattenförmigen Materials 8, um Werkstücke 24, insbesondere Gutteile, herzustellen, wobei gleichzeitig auch Restteile und/oder ein Restgitter 25 entstehen. Anschließend wird das bearbeitete plattenförmige Material 8 mittels der Palette 11 wieder in die Be- und Entladestation 10 verfahren, so dass durch die Handlingseinrichtung oder von Hand die Werkstücke 24 und das Restgitter 25 von der Palette 11 entnommen werden können. Darauffolgend wird die Palette 11 mit einem unbearbeiteten plattenförmigen Material 8 wieder bestückt.

Die Palette 11 wird durch eine Öffnung 14 in der Umhausung 4 ein- und ausgefahren. Die Öffnung 14 kann durch ein nicht näher dargestelltes Verschlusselement, wie beispielsweise eine Tür oder eine Klappe, verschlossen sein und wird während der Verfahrbewegung der Palette 11 geöffnet.

In Figur 2 ist perspektivisch die Laserschneidmaschine 2 dargestellt. Diese ist beispielsweise eine CO₂-Laserschneidmaschine mit einer CO₂-Laserquelle 12. Ein von der Laserquelle 12 erzeugter Laserstrahl 21 wird mittels einer Strahlführung 22 von nicht näher dargestellten Umlenkspiegeln zum Laserschneidkopf 7 geführt und in diesem fokussiert. Danach wird der Laserstrahl 21 durch eine Schneiddüse 20 senkrecht zur Oberfläche eines plattenförmigen Materials 8 ausgerichtet. Die Strahlachse (optische Achse) des Laserstrahls 21 verläuft senkrecht zur Oberfläche des plattenförmigen Materials 8, welches von einer Werkstückauflage 36 aufgenommen ist. Der Laserstrahl 21 wirkt am Prozessort B gemeinsam mit einem Prozessgasstrahl 26 auf das plattenförmige Material 8 ein. Alternativ kann die Laserschneidmaschine 2 einen Festkörperlaser als Laserquelle aufweisen, dessen Strahlung mit Hilfe eines Lichtleitkabels zum Laserschneidkopf 7 geführt wird.

Zum Laserschneiden des plattenförmigen Materials 8 wird mit dem Laserstrahl 21 unter Zuführung von einem Prozessgas 26 zunächst eingestochen. Nachfolgend wird der Laserstrahl 21 über das plattenförmige Material 8 bewegt, so dass ein durchgängiger Schnittspalt 19 entsteht, an dem der Laserstrahl 21 das plattenförmige Material 8 durchtrennt. Dadurch entsteht zumindest ein freigeschnittenes Werkstück 24, das vom Restgitter oder Restgitterteilen 25 getrennt ist.

Die während dem Einstechen und Laserschneiden entstehenden Partikel und Gase können mit Hilfe einer Absaugeinrichtung 28 aus einer Absaugkammer 29 abgesaugt werden.

Die Ansteuerung der Laserschneidmaschine 2 und/oder der Maschine 1 erfolgt über eine Maschinen-Steuerungseinrichtung 31. Die Maschinen-Steuerungseinrichtung 31 steuert beispielsweise den Einstechvorgang des Schneidstrahls in das plattenförmige Material 8 und übernimmt die weiteren Steueraufgaben der Laserschneidmaschine 2 zur Bildung des Schnittspalts 19. Die Maschinen-Steuerungseinrichtung 31 steht mit einer Laser-Steuerungseinrichtung 32 in signaltechnischer Verbindung, die typischerweise in der Laserquelle 12 integriert ist.

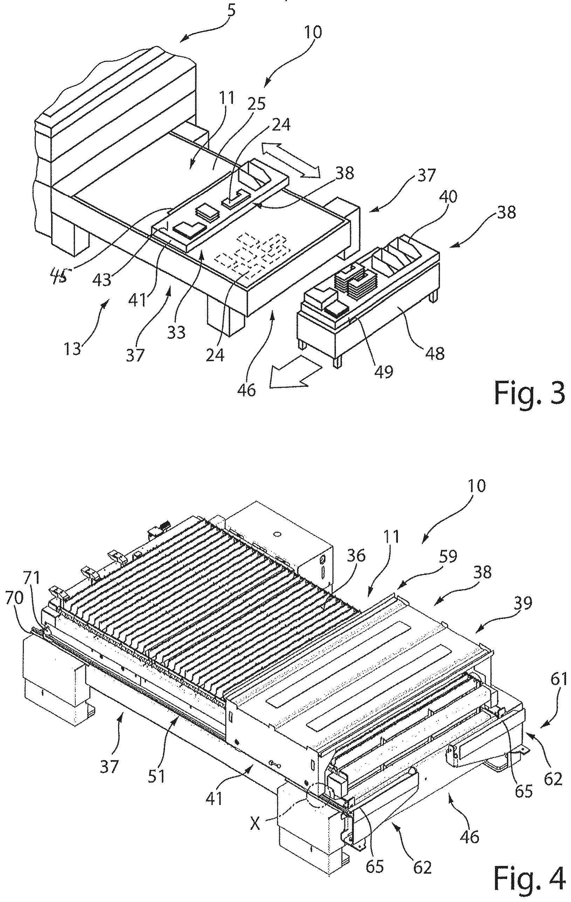

In Figur 3 ist perspektivisch und schematisch der Palettenwechsler 13 dargestellt. Dieser umfasst ein Grundgestell 37, welches zumindest eine Palette 11 relativ zum Grundgestell 37 verfahrbar aufnimmt, um dieses in die Bearbeitungsstation 5 einzufahren und wieder herauszuführen. Zusätzlich kann die zumindest eine von dem Grundgestell 37 aufgenommene Palette 11 in der Höhe verfahrbar sein.

Auf dem Palettenwechsler 13, insbesondere dem Grundgestell 37, ist eine Absortiervorrichtung 38 vorgesehen. Diese Absortiervorrichtung 38 ist relativ zur Palette 11 verfahrbar. Insbesondere ist diese Absortiervorrichtung 38 in Längsrichtung des Palettenwechslers 13 verfahrbar. Diese Absortiervorrichtung 38 umfasst eine Brücke 39, welche am jeweiligen Ende, insbesondere an beiden Schmalseiten, jeweils ein Fahrwerk 41 aufnimmt, durch welches die Absortiervorrichtung 38 auf dem Grundgestell 37 verfahrbar ist. Die Brücke 39 erstreckt sich über die gesamte Breite der Palette 11 und überspannt diese vollständig. Auf der Brücke 39 ist eine Ablagefläche 43 vorgesehen, auf welche die mit der Palette 11 in die Be- und Entladestation 10 eingefahrenen Werkstücke 24 aufgelegt werden können. Die Ablagefläche 43 kann als eine durchgehend ebene Fläche ausgebildet sein. Ebenso können daran Fixier- bzw. Arretierstifte eingesetzt werden, die auf die Größe der Werkstücke 24 oder auf die Größe von Behältern 40 angepasst positioniert werden, um eine Verrutschsicherung für die Werkstücke 24 oder die Behälter 40 zu bilden.

Die in Figur 3 gezeigte Absortiervorrichtung 38 umfasst an zumindest einer Längsseite, vorzugsweise an beiden Längsseiten, einen Handlauf 45, so dass der Werker die Absortiervorrichtung 38 von Hand entlang dem Grundgestell 37 in eine geeignete Position entlang der Werkstückauflage 36 der Palette 11zum Absortieren der Werkstücke 24 verfahren kann, wodurch kurze Wege bei der Umsetzung der Werkstücke 24 von der Palette 11 auf die Werkstückauflage 43 der Absortiervorrichtung 38 gegeben sind.

In Figur 3 ist des Weiteren an einer der Bearbeitungsstation 5 abgewandten Stirnseite 46 beziehungsweise hinteren Querseite des Palettenwechslers 13 ein Transportwagen 48 positionierbar, der in der Höhe und Breite mit seiner Transportfläche 49 an das Grundgestell 37 angepasst ist, so dass die Absortiervorrichtung 38 von dem Grundgestell 37 auf die Transportfläche 49 verfahrbar ist. Darauffolgend kann die Absortiervorrichtung 38 mit den darauf aufliegenden Werkstücken 24 einem weiteren Bearbeitungsschritt oder einer Magazinierung zugeführt werden. Ein solcher Transportwagen 48 ist alternativ auch an der Querseite der Bearbeitungsmaschine 2 positionierbar, wenn die Bearbeitungsmaschine 2 keine Be- und Entladestation aufweist.

Darauffolgend lässt sich ein Restgitter 25 von der Palette 11 entnehmen. Anschließend kann die Palette 11 mit einem neuen plattenförmigen Material 8 für den nachfolgenden Bearbeitungsgang bestückt werden.

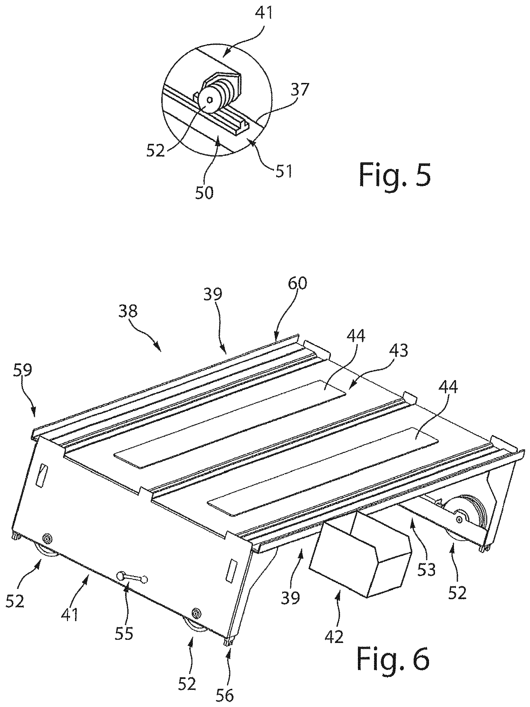

In Figur 4 ist eine schematisch vergrößerte Ansicht des Grundgestells 37 mit der Palette 11 dargestellt. Auf dem Grundgestell 37 ist eine Ausführungsform gemäß der Erfindung der Absortiervorrichtung 38 zu Figur 3 verfahrbar vorgesehen. Diese Ausführungsform der Absortiervorrichtung 38 wird nachfolgend in Figur 6 näher beschrieben. Benachbart zur Palette 11 ist mindestens an einer Längsseite des Grundgestells 37 eine Führungsschiene 51 vorgesehen, welche das Fahrwerk 41 der Absortiervorrichtung 38 für eine Verfahrbewegung aufnimmt. Diese Führungsschiene 51 kann mehrteilig ausgebildet sein. Dies weist den Vorteil auf, dass bei Wartungszwecken einzelne Abschnitte getrennt demontiert werden können und die einfache Zugänglichkeit zu allen Bauteilen des Palettenwechslers 13 gewährleistet bleibt. Bevorzugt ist die Führungsschiene 51 als Achtkant-Führungsschiene ausgebildet und nimmt Laufrollen 52 auf, welche im mittleren Bereich eine nutenförmige Vertiefung aufweisen. Dies geht aus dem Detail X in Figur 5 hervor, welche die Führungsschiene 51 mit einer daran geführten Laufrolle 52 schematisch vergrößert darstellt. Dadurch wird die Absortiervorrichtung 38 sicher geführt. Des Weiteren wird verhindert, dass die Absortiervorrichtung 38 herunterfällt, verkantet oder schlingert.

An der zweiten Längsseite des Grundgestells 37 kann ebenfalls eine Führungsschiene 51 oder alternativ nur eine Lauffläche 50 für die Laufrollen 52 der Absortiervorrichtung 38 vorgesehen sein.

An dem Grundgestell 37 der Be- und Entladestation 10, insbesondere an dem Palettenwechsler 13, ist ein Ablagepodest 61 angeordnet, welches aus zwei Auflageelementen 62 besteht. Dieses Ablagepodest 61 ist in Figur 4 in einer Nichtgebrauchsposition dargestellt. In dieser Nichtgebrauchsposition sind die Auflageelemente 62 in einer eingeklappten Position angeordnet, das heißt, dass die Auflageelemente 62 parallel zur Stirnseite 46 des Grundgestells 37 ausgerichtet sind. Durch diese Auflageelemente 62 in einer Nichtgebrauchsposition beziehungsweise in einer eingeklappten Position und einem an dem Auflageelement 62 angeordneten Anschlag 65 einerseits und durch einen gegenüberliegenden Anschlag 70, der vorzugsweise ein Dämpfungselement 71 aufnimmt, andererseits wird eine Verfahrbewegung der Absortiervorrichtung 38 entlang einer Längsseite der Palette 11 begrenzt.

In Figur 6 ist perspektivisch vergrößert die Ausführungsform gemäß der Erfindung der Absortiervorrichtung 38 gemäß Figur 4 dargestellt. Die Brücke 39 und das Fahrwerk 41 sind an einem gemeinsamen Gestell aufgenommen. Auf der Brücke 39 ist die Ablagefläche 43 fest oder abnehmbar vorgesehen, auf welche die Werkstücke 24 aufgelegt werden können. Die Auflagefläche 43 weist einen zumindest teilweise umlaufenden Rand 59 auf. Insbesondere erstreckt sich der Rand 59 entlang einer Längsseite der Brücke 39. Dieser Rand 59 kann gleichzeitig auch als ein Griff zum Ziehen oder Schieben der Absortiervorrichtung 38 auf der Palette 11 dienen, wenn er an seiner Oberkante 60 gerundet, umgefalzt oder umgebogen ist. Dies ist dann vorteilhaft, wenn die Absortiervorrichtung 38 keinen Handlauf aufweist. Dieser Rand 59 erstreckt sich vorteilhafterweise im jeweiligen Eckbereich und kann auch zumindest abschnittsweise entlang der Schmalseiten der Brücke 39 vorgesehen sein. Dadurch wird gleichzeitig ermöglicht, dass auf der Auflagefläche 43 aufgesetzte Transportpaletten (Holzpaletten) oder Behälter 40 gesichert gegen Verrutschen aufgenommen werden können. Die Ablagefläche 43 beziehungsweise der die Ablagefläche 43 umgebende Rand sind derart vorgesehen, dass verschiedene gängige Palettenformate, wie beispielsweise eine Europool-Palette mit einem Maß von 1200 x 800 mm oder in China übliche Paletten mit einem Maß von 1100 x 1100 oder 1000 x 800 mm oder dergleichen, aufgenommen werden können. Die Höhe und Ausdehnung des Randes 59 gegenüber der Ablagefläche 43 ist derart bemessen, dass einerseits eine Sicherung der darauf aufgestellten Transportpalette gegen Verrutschen gegeben ist, jedoch andererseits ein noch hinreichender Freiraum verbleibt, so dass ein Hebewerkzeug mit Gabelzinken die Transportpalette untergreifen kann. Die Ablagefläche 43 kann ergänzend auch noch strukturiert beziehungsweise mit verschiedenen Erhebungen 44 und/oder Vertiefungen ausgebildet sein, um die einzelnen Palettengrößen verrutschsicher aufzunehmen.

An einer Seitenkante der Ablagefläche 43, insbesondere an einer quer zur Fahrtrichtung der Absortiervorrichtung 38 sich erstreckenden Seitenkante der Ablagefläche 43 ist ein Transportbehälter 42 vorgesehen. Dieser kann zur Aufnahme von Hilfsmitteln, wie beispielsweise Handschuhen, Werkzeugen oder dergleichen, dienen. Alternativ und/oder zusätzlich können auch Klemmvorrichtungen oder dergleichen vorgesehen sein. Gemäß einer einfachen Ausführungsform ist vorgesehen, dass der Transportbehälter 42 an dem Rand 59 eingehängt werden kann.

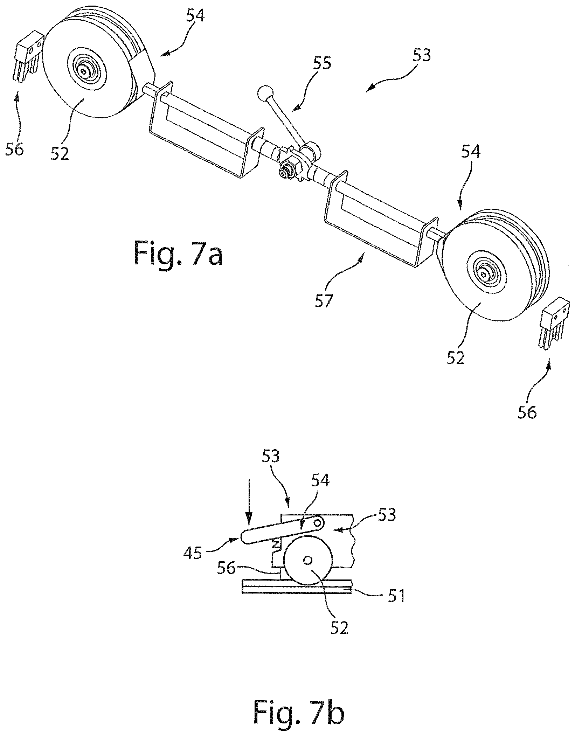

Die Absortiervorrichtung 38 gemäß Figur 6 umfasst eine Bremsvorrichtung 53, welche teilweise in Figur 6 ersichtlich und in Figur 7a näher dargestellt ist. Die Bremsvorrichtung 53 ist mit einem Bremshebel 55 betätigbar, der beispielsweise an einer Stirnseite der Absortiervorrichtung 38 vorgesehen ist, so dass für den Werker eine gute Zugänglichkeit gegeben ist. Die Bremsvorrichtung 53 umfasst zumindest eine Bremsbacke 54, die an einer Laufrolle 52 angreift. Im Ausführungsbeispiel gemäß Figur 7a werden beide am Fahrwerk 41 vorgesehene Laufrollen 52 mit jeweils einer Bremsbacke 54 blockiert. Hierzu ist ein Schiebegestänge 57 vorgesehen, welches durch manuelles Umlegen des Bremshebels 55 in eine gelöste oder aktivierte Position überführbar ist.

An den jeweils in Fahrtrichtung der Laufrollen 52 vorauseilenden Stirnseiten des Fahrwerks 41 ist ein Bürstenelement 56 oder dergleichen vorgesehen, um die Führungsschiene 51 von Staub und Verschmutzungen zu reinigen und somit die Laufrollen 52 vor Abnutzung zu schützen.

In Figur 7b ist eine schematische Seitenansicht einer alternativen Ausführungsform der Bremsvorrichtung 53 für eine Absortiervorrichtung 38 gezeigt. Bei dieser Ausführungsform ist entlang der Längsseite der Brücke 39 ein Handlauf 45 angeordnet, wie dies auch in Figur 3 dargestellt ist. Dieser Handlauf 45 wirkt gleichzeitig als Bremshebel für die Bremsvorrichtung 53. Beim Herunterdrücken des Handlaufs 45 wird die Bremsvorrichtung 53 gelöst, um die Absortiervorrichtung 38 zu verfahren, und beim Loslassen des Handlaufs 45 geht die Bremsvorrichtung 53 selbständig in den aktivierten Zustand über, in dem die Bremsbacken 54 an den Laufrollen 52 angreifen und eine Verfahrbewegung blockieren.

Gemäß dieser Ausführungsform der Bremsvorrichtung 53 ist bei einer Nichtbetätigung des Handlaufs 45 die Bremsvorrichtung 53 aktiviert und wirkt auf zumindest eine Laufrolle 52. Dadurch kann verhindert werden, dass beim Absortieren, insbesondere von großen und schweren Bauteilen, oder beim Abstützen des Werkers ein selbständiges Davonrollen der Absortiervorrichtung 38 erfolgt. Durch die Betätigung des Handlaufs 45 wird die Bremsvorrichtung 53 gelöst, so dass daraufhin die Verfahrbewegung in die nächste Absortierposition erfolgen kann.

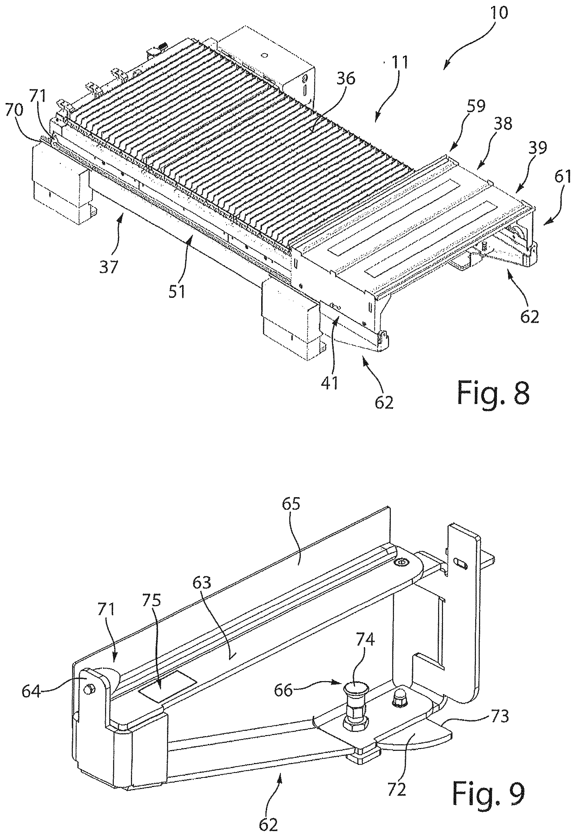

In Figur 8 ist eine perspektivische Ansicht der Be- und Entladestation 10 mit dem Ablagepodest 61 gemäß Figur 4 in einer Gebrauchsposition dargestellt. In dieser Gebrauchsposition sind die Auflageelemente 62 ausgeklappt. In dieser ausgeklappten Position der Auflageelemente 62 fluchten die Laufflächen 63 an dem jeweiligen Auflageelement 62 zu der oder den Führungsschiene(n) 51 und/oder zu den Laufflächen xx auf dem Grundgestell 37 der Be- und Entladestation 10, so dass die Absortiervorrichtung 38 vollständig auf das Ablagepodest 61 übergeführt werden kann, wie dies in Figur 8 dargestellt ist. Dadurch kann ein Restgitter auf der Palette in einfacher Weise entnommen und ein neues plattenförmiges Material 8 auf die Werkstückauflage 36 der Palette 11 für den nachfolgenden Bearbeitungsvorgang wieder aufgelegt werden. Diese Bearbeitung kann beispielsweise parallel zu einer Entnahme der Werkstücke von der Absortiervorrichtung 38 auf dem Ablagepodest 61 erfolgen.

In Figur 9 ist eine schematisch vergrößerte Ansicht eines Auflageelementes 62 dargestellt. Dieses Auflageelement 62 weist an einem Ende der Stirnseite einen Anschlag 64 auf, durch welchen die Lauffläche 63 begrenzt ist. Dadurch ist beim Überführen der Absortiervorrichtung 38 auf das Ablagepodest 61 ein Herunterfallen verhindert. Des Weiteren weist das Auflageelement 62 einen weiteren Anschlag 65 auf. Dieser Anschlag 65 kann sich entlang der gesamten Lauffläche 63 erstrecken. Alternativ kann sich dieser auch nur über die Breite der Laufrollen 52 erstrecken und so angeordnet sein, dass im eingeklappten Zustand der Auflageelemente 62 der Anschlag 65 der mit der Führungsschiene 51 fluchtet. Dadurch wird ein Herunterfallen der Absortiervorrichtung 38 über die Stirnseite 46 des Grundgestells 37 des Palettenwechslers 13 verhindert. Bevorzugt sind am Ende der Laufflächen 63 und/oder an dem Anschlag 64 Gummibeläge 75 und/oder ein Dämpfungselement 71, z.B. ein Parabelpuffer, angeordnet, um ein gedämpftes Abbremsen der Absortiervorrichtung 38 beim Auffahren auf das Ablagepodest 61 zu ermöglichen. Ein Anschlag 70 mit einem daran angeordneten Dämpfungselement 71 kann auch der Lauffläche 50 des Palettenwechslers 13 in einem Bereich zugeordnet sein, der dem Anlagepodest 61 gegenüber liegt, so dass die Verfahrstrecke der Absortiervorrichtung 38 entlang der Palette 11 begrenzt ist. Dies geht beispielsweise aus Figur 4 hervor, welche einen Anschlag 70 mit einem Dämpfungselement 71 nahe einer Umhausung der Bearbeitungsstation 51 zeigt.

Die Auflageelemente 62 weisen eine trapezförmige Gestalt auf, um einerseits materialsparend, andererseits jedoch hinreichend steif ausgebildet zu sein, um die Absortiervorrichtung 38 mit den darauf aufliegenden Werkstücken 24 aufzunehmen.

Das Überführen der Auflageelemente 62 aus der eingeklappten Position in die ausgeklappte Position zur Bildung des Ablagepodests 61 kann durch Lösen einer lösbaren Rastverbindung 66 erfolgen oder alternativ gegen die Wirkung von Haltemagneten. Die jeweilige Lage der Auflageelemente 62 ist selbstsichernd gehalten. Durch ein manuell betätigbares Riegelelement oder einen Riegelbolzen wird zumindest die ausgeklappte Position gesichert oder gelöst.

In Figur 9 greift beispielsweise der Riegelbolzen (nicht sichtbar) der Rastverbindung 66 in eine nicht näher dargestellte Bohrung einer Riegelfläche 72 ein. Beispielsweise kann der Riegelbolzen durch Anheben eines Betätigungsknopfes 74 gelöst werden, so dass das Auflageelement 62 schwenkbar ist. Die eingeklappte Position des Auflageelementes 62 kann dadurch gesichert werden, dass der Riegelbolzen eine Riegelkante 73 der Riegelfläche 72 hintergreift. Alternativ können an den Auflageelementen 62 und/oder am Grundgestell 37 Magnete angebracht sein, durch die die Auflageelemente 62 in der eingeklappten Position gehalten werden.

Des Weiteren kann das Ablagepodest 61 in der Höhe verfahrbar sein; entweder allein oder gemeinsam mit der Palette 11. Dies ermöglicht ein gesteuertes Ablegen der Auflage 58 und/oder der gesamten Absortiervorrichtung 38 auf einen zwischen den Auflageelementen 62 positionierten Transportwagen 48.

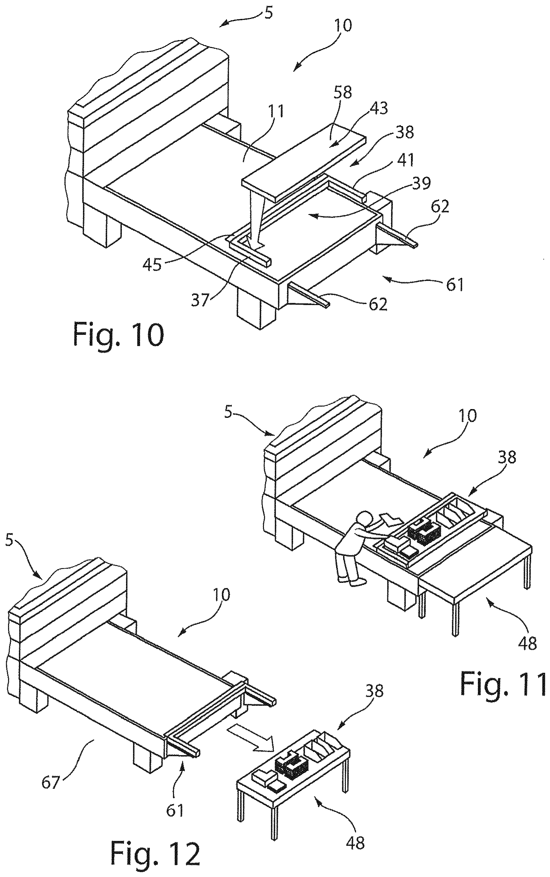

In Figur 10 ist eine weitere alternative Absortiervorrichtung 38 dargestellt. Dabei ist die Brücke 39 als ein U-förmiger Rahmen ausgebildet, wobei an den zwei parallelen kurzen Schenkeln das Fahrwerk 41 vorgesehen ist und der dazwischen liegende lange Schenkel die Palette 11 überspannt. An diesem langen Schenkel kann beispielsweise ein Handlauf 45 vorgesehen sein. Bei dieser Ausführungsform ist die Ablagefläche 43 an einer abnehmbaren Auflage 58 vorgesehen, welche vorzugsweise in einer nicht näher dargestellten lösbaren Rastverbindung an der Brücke 39 lagegesichert ist. Diese Auflage 58 kann die Ablagefläche 43 mit einem Rand 59 umgeben, wie dies beispielsweise in Figur 6 beschrieben ist. Alternativ kann bei solchen austauschbaren Auflagen 58 die Ablagefläche 43 mit einer Rasterung oder einzelnen Fächern versehen sein, so dass die absortierten Werkstücke 24 einem jeweiligen Raster- oder Ablagefach zugeordnet werden können und somit eine definierte Positionierung der Werkstücke 24 auf der Ablagefläche 43, beispielsweise für einen nachfolgenden Arbeitsgang oder eine Magazinierung, vorgesehen ist.

In Figur 11 ist eine Arbeitssituation bei der Entnahme der Werkstücke 24 und das Ablegen auf der Absortiervorrichtung 38 beispielhaft dargestellt. Ein Werker führt die Absortiervorrichtung 38 in eine für ihn günstige Position, so dass darauffolgend die einzelnen Werkstücke 24 auf die Ablagefläche 43 abgelegt werden können. Dabei kann sich der Werker mit seiner rechten Hand am Rand 59 oder dem Handlauf 45 abstützen, um insbesondere Werkstücke 24 im mittleren Bereich der Palette 11 in einfacher Weise entnehmen zu können. Durch die Verfahrbarkeit der Absortiervorrichtung 38 kann diese beispielsweise auch nach links verfahren werden, so dass ein rechter Bereich der Palette 11 absortiert werden kann.

Es wird offensichtlich, dass die Absortiervorrichtung 38 ein gleichzeitiges Absortieren der Werkstücke 24 durch zwei Werker jeweils an einer Längsseite der Palette 11 ermöglicht. Auch ist durch die Absortiervorrichtung 38 die Palette 11 sowohl von einer rechten oder linken Längsseite in gleichem Maße zugänglich.

Nachdem die Werkstücke 24 von der Palette 11 entnommen und auf der Absortiervorrichtung 38 aufgelegt sind, kann die Absortiervorrichtung 38 auf das Ablagepodest 61 verfahren werden. Darauffolgend ist wiederum die Entnahme des Restgitters 25 und das Bestücken mit einem neuen plattenförmigen Material 8 ermöglicht. Dem Ablagepodest 61 ist der Transportwagen 48 zugeordnet, der vorteilhafterweise zwischen den Auflageelementen 62 positionierbar ist. Sofern das Ablagepodest 61 höhenverstellbar ist, kann durch ein Absenken der Auflageelemente 62 die Absortiervorrichtung 38 im Gesamten oder nur die Auflage 58 auf dem Transportwagen 48 aufgelegt werden, um diese abzutransportieren.

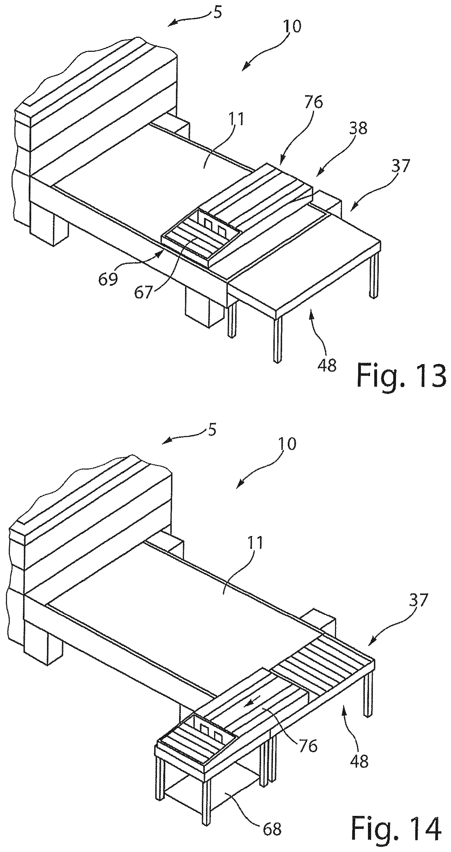

In Figur 13 ist eine perspektivische Ansicht der Be- und Entladestation 10 mit einer weiteren alternativen Ausführungsform der Absortiervorrichtung 38 vorgesehen. Bei dieser Absortiervorrichtung 38 ist die Ablagefläche 43 als eine Rollenbahn 69 mit mehreren Rollen 67 ausgebildet, wobei an einem stirnseiteigen Ende der Absortiervorrichtung 38 ein klappbarer Rand vorgesehen ist. Auf dieser Rollenbahn 69 kann beispielsweise eine Transportpalette (Europool-Palette) 76 aufgesetzt werden, um daraufhin die Werkstücke 24 auf der Transportpalette 76 abzulegen. Diese Absortiervorrichtung 38 kann nach der Entnahme der Werkstücke 24 auf das Ablagepodest 61 übergeführt werden, welches beispielsweise auch als ein Tisch ausgebildet sein kann. Darauffolgend kann ein Beistellwagen 68 dem Ablagepodest 61 zugeordnet werden, welcher ebenfalls eine Rollenbahn umfasst, um die Transportpalette 76 auf den Beistellwagen 68 überzuführen. Während diesem Umsetzen kann wiederum das Restgitter 25 entnommen und ein neues plattenförmiges Material 8 auf die Palette 11 aufgelegt werden. Alternativ zur Bereitstellung des Beistellwagens 68 kann die Transportpalette 76 auch mit einem Gabelstapler oder einer anderen Hebevorrichtung entladen werden.

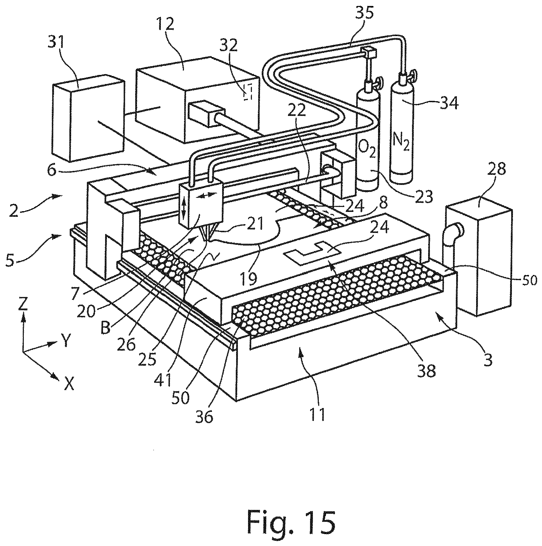

In den hier vorbeschriebenen Beispielen ist die Absortiervorrichtung 38 der Be- und Entladestation 10 zugeordnet. Es ist aber alternativ genauso möglich, wie dies in Figur 15 dargestellt ist, die Absortiervorrichtung 38 direkt in der Bearbeitungsstation 5 beziehungsweise in der Maschine 2 anzuordnen, wenn diese nicht von einer Umhausung 4 umgeben ist. Das ist dann möglich, wenn der Laserschneidkopf 7 einen lokalen Strahlschutz aufweist, der in Figur 5 nicht dargestellt ist. In dieser Ausführungsform ist die Absortiervorrichtung 38 beispielsweise auf Laufflächen 50 des Maschinengrundgestells 3 verfahrbar angeordnet. Zumindest an einer der Laufflächen 50 kann eine Führungsschiene 51 für die Absortiervorrichtung 38 angeordnet sein.

Das Ablagepodest 61 kann analog wie bei der Be- und Entladestation 10 am Grundgestell 3 der Bearbeitungsmaschine 2 angebracht sein, wenn die Bearbeitungsmaschine 2 keine Be- und Entladestation 10 aufweist. In der ausgeklappten Position der Auflageelemente 62 fluchten dann die Laufflächen 63 an dem jeweiligen Auflageelement 62 zu Laufflächen 50 auf dem Grundgestell 3 der Bearbeitungsmaschine 2, so dass die Absortiervorrichtung 38 vollständig auf das Ablagepodest 61 übergeführt werden kann. Dadurch kann in der Bearbeitungsmaschine 2 die Werkstückbearbeitung ungehindert erfolgen.

## Patentansprüche

1. Bearbeitungsmaschine zum trennenden Bearbeiten eines plattenförmigen Materials (8) mit einer Bearbeitungsstation (5), in der durch einen Bearbeitungskopf (7) die trennende Bearbeitung erfolgt, und mit einer Werkstückauflage (36) zur Aufnahme des plattenförmigen Materials (8) und mit einer außerhalb der Bearbeitungsstation (5) angeordneten Be- und Entladestation (10), in die die Werkstückauflage (36) bewegbar ist, wobei die Beund Entladestation (10) eine mobile Absortiervorrichtung (38) aufweist, die sich zumindest teilweise über die Werkstückauflage (36) erstreckt und zumindest teilweise entlang der Werkstückauflage (36) verfahrbar ist und wobei die Absortiervorrichtung (38) eine Brücke (39) aufweist, welche die Werkstückauflage (36) überspannt und von zwei jeweils an einer Seite der Brücke (39) angeordneten Fahrwerken (41) getragen ist, wobei die Absortiervorrichtung eine Ablagefläche (43) für bearbeitete Werkstücke (24) aufnimmt.

2. Bearbeitungsmaschine nach Anspruch 1, **dadurch gekennzeichnet, dass** die Werkstückauflage (36) an einer Palette (11) gebildet ist, welche zwischen der Bearbeitungsstation (5) und der Be- und Entladestation (10) verfahrbar ist.

3. Bearbeitungsmaschine nach einem der vorhergehenden Ansprüche, **dadurch gekennzeichnet, dass** das Fahrwerk (41) Laufrollen (52) oder Gleitelemente aufweist, und vorzugsweise das zumindest eine Fahrwerk (41) eine Bremsvorrichtung (53) aufweist, welche mit einem Handlauf (45) entlang einer Seitenfläche der Brücke (39) oder einem Bremshebel (55) an der Brücke (39) betätigbar ist.

4. Bearbeitungsmaschine nach einem der Ansprüche 2 oder 3, **dadurch gekennzeichnet, dass** die Palette (11) von einem Grundgestell (37) der Be- und Entladestation (10), insbesondere von dem Grundgestell (37) eines Palettenwechslers (13), verfahrbar aufgenommen und die Absortiervorrichtung (38) auf oder entlang mindestens einer Führungsschiene (51) verfahrbar geführt ist, wobei die Führungsschiene (51) auf dem Grundgestell (37) benachbart zur Palette (11), auf der Palette (11) oder am Boden entlang einer Längsseite des Grundgestells (37) angeordnet ist.

5. Bearbeitungsmaschine nach einem der vorhergehenden Ansprüche **dadurch gekennzeichnet, dass** die Ablagefläche (43) der Brücke (39) durch einen zumindest teilweise entlang der Längsseite der Ablagefläche (43) sich erstreckenden und gegenüber der Ablagefläche (43) erhöhten Rand (59) begrenzt ist, der insbesondere eine gerundete, mit einem Kantenschutz versehene oder umgebogene Oberkante (60) aufweist.

6. Bearbeitungsmaschine nach einem der vorhergehenden Ansprüche, **dadurch gekennzeichnet, dass** die Ablagefläche (43) fest an der Brücke (39) oder an einer von der Brücke (39) abnehmbaren Auflage (58) vorgesehen ist oder die Ablagefläche (43) als eine auf der Brücke (39) aufsetzbare oder daran angeordnete Rollenbahn (69) ausgebildet ist.

7. Bearbeitungsmaschine nach einem der vorhergehenden Ansprüche, **dadurch gekennzeichnet, dass** an der Brücke (39) benachbart zum Fahrwerk (41) eine Bürste (56) angeordnet ist.

8. Bearbeitungsmaschine nach einem der vorhergehenden Ansprüche, **dadurch gekennzeichnet, dass** an der Brücke (39) ein Transportbehälter (42) und/oder Klemmvorrichtungen für Hilfsmittel angeordnet sind.

9. Bearbeitungsmaschine nach einem der vorhergehenden Ansprüche mit einem Transportwagen (48), der an einer Stirnseite der Bearbeitungsmaschine (2) oder einer der Bearbeitungsstation (5) gegenüberliegenden Stirnfläche (46) der Be- und Entladestation (10) positionierbar ist und auf den die Absortiervorrichtung (38) überführbar ist.

10. Bearbeitungsmaschine nach einem der Ansprüche 1 bis 8, **dadurch gekennzeichnet, dass** an einer Stirnseite der Bearbeitungsmaschine (2) oder einer der Bearbeitungsstation (5) gegenüberliegenden Stirnseite (46) der Be- und Entladestation (10) zumindest ein Ablagepodest (61) vorgesehen ist, welches Auflageelemente (62) mit Laufflächen (63) aufweist, auf welche die Absortiervorrichtung (38) überführbar ist.

11. Bearbeitungsmaschine nach Anspruch 10, **dadurch gekennzeichnet, dass** die Auflageelemente (62) schwenkbar, klappbar oder einschiebbar an dem Grundgestell (3, 37) der Bearbeitungsmaschine (2) oder der Be- und Entladestation (10) angeordnet und aus einer parallel zur Stirnseite (46) des Grundgestells (3, 37) eingeklappten oder in das Grundgestell (3, 37) eingeschobenen Position in eine ausgefahrene oder ausgeklappte Position überführbar sind, in welcher die Laufflächen (63) der Auflageelemente (62) mit einer jeweiligen angrenzenden Lauffläche (50) und/oder Führungsschiene (51) auf dem Grundgestell (3, 37) fluchten.

12. Bearbeitungsmaschine nach Anspruch 10 oder 11, **dadurch gekennzeichnet, dass** die Auflageelemente (62) einen stirnseitigen Anschlag (64) aufweisen, welcher eine Lauffläche (63) der Auflageelemente (62) begrenzt, und insbesondere einen seitlichen Anschlag (65) aufweisen, der im eingeklappten Zustand der Auflageelemente (62) eine Verfahrstrecke der Absortiervorrichtung (38) außerhalb des Grundgestells (3, 37) der Bearbeitungsmaschine (2) oder der Be- und Entladestation (10) begrenzt.

13. Bearbeitungsmaschine nach einem der Ansprüche 10 bis 12, **dadurch gekennzeichnet, dass** die Auflageelemente (62) höhenverstellbar an dem Grundgestell (3, 37) der Bearbeitungsmaschine (2) oder der Be- und Entladestation (10) angeordnet sind.

14. Bearbeitungsmaschine nach einem der Ansprüche 10 bis 13, **dadurch gekennzeichnet, dass** die Auflageelemente (62) zumindest in der ausgeklappten oder ausgefahrenen Position mit einer lösbaren Rastverbindung (66) gesichert sind.

15. Bearbeitungsmaschine nach einem der Ansprüche 10 bis 14, **dadurch gekennzeichnet, dass** auf den Laufflächen (63) der Auflageelemente (62) Beläge zum Bremsen der Bewegung der Absortiervorrichtung (38) angeordnet sind.

## Claims

1. A processing machine for separatingly processing a plate-shaped material (8), including a processing station (5) in which said separating processing is performed by means of a processing head (7), and including a workpiece support (36) for receiving said plate-shaped material (8), and including a loading and unloading station (10) which is disposed outside of said processing station (5) and to which the workpiece support (36) may be moved, said loading and unloading station (10) having a mobile sorting device (38) which extends at least partially across the workpiece support (36) and may be moved at least partially along the workpiece support (36), and said sorting device (38) having a bridge (39) spanning over the workpiece support (36) and being supported by two running gears (41) disposed respectively on either side of the bridge (39), said sorting device receiving a deposition surface (43) for processed workpieces (24).

2. The processing machine as claimed in claim 1, **characterised in that** the workpiece support (36) is formed on a pallet (11) which can be moved between the processing station (5) and the loading and unloading station (10).

3. The processing machine as claimed in any of the preceding claims, **characterised in that** the running gear (41) has rollers (52) or sliding members and **in that** preferably the at least one running gear (41) has a braking device (53) which may be actuated via a handrail (45) running along a lateral surface of the bridge (39) or via a brake lever (55) arranged on said bridge (39).

4. The processing machine as claimed in any one of claims 2 or 3, **characterised in that** the pallet (11) is movably received by a base frame (37) of the loading and unloading station (10), in particular by the base frame (37) of a pallet changer (13), and **in that** the sorting device (38) is guided on, or along, at least one guide rail (51), with the guide rail (51) being disposed on the base frame (37) adjacent to the pallet (11), on the pallet (11), or on the floor along a longitudinal side of the base frame (37).

5. The processing machine as claimed in any of the preceding claims, **characterised in that** the deposition surface (43) of the bridge (39) is delimited by a rim (59) which extends at least partially along the longitudinal side of the deposition surface (43), is raised from the deposition surface (43) and has, in particular, a rounded upper edge (60) that is bent over or is provided with an edge protector.

6. The processing machine as claimed in any of the preceding claims, **characterised in that** the deposition surface (43) is fixedly provided either on the bridge (39) or on a rest (58) that may be removed from the bridge (39), or **in that** the deposition surface (43) is realised in the form of a roller conveyor (69) that may be fitted onto or arranged on said bridge (39).

7. The processing machine as claimed in any of the preceding claims, **characterised in that** a brush (56) is arranged on the bridge (39) adjacent to the running gear (41).

8. The processing machine as claimed in any of the preceding claims, **characterised in that** a transport container (42) and/or clamping devices for auxiliary means are arranged on the bridge (39).

9. The processing machine as claimed in any of the preceding claims, including a transport carriage (48) that may be positioned at an end face of the processing machine (2) or at an end face (46) of the loading and unloading station (10) opposing the processing station (5) and onto which the sorting device (38) may be transferred.

10. The processing machine as claimed in any one of claims 1 to 8, **characterised in that** at least one deposition platform (61) is provided at an end face of the processing machine (2) or at an end face (46) of the loading and unloading station (10) opposing the processing station (5), which deposition platform has support elements (62) provided with running faces (63) onto which the sorting device (38) may be transferred.

11. The processing machine as claimed in claim 10, **characterised in that** the support elements (62) are disposed on the base frame (3, 37) of the processing machine (2) or of the loading and unloading station (10), in a manner so as to be pivotable, foldable or retractable, and **in that** they may be transferred from a folded position, in which they are parallel with the end face (46) of the base frame (3, 37), or from a retracted position, in which they are pushed into the base frame (3, 37), to an extended position or unfolded position, in which the running faces (63) of the support elements (62) are in alignment with a corresponding, adjacent running face (50) and/or guide rail (51) provided on said base frame (3, 37).

12. The processing machine as claimed in claim 10 or 11, **characterised in that** the support elements (62) have a frontal stop (64) delimiting a running face (63) of said support elements (62) and, in particular, a lateral stop (65) which delimits a travelling path of the sorting device (38) outside the base frame (3, 37) of the processing machine (2) or of the loading and unloading station (10) when the support elements (62) are in their folded condition.

13. The processing machine as claimed in any one of claims 10 to 12, **characterised in that** the support elements (62) are arranged in a height-adjustable manner on the base frame (3, 37) of the processing machine (2) or of the loading and unloading station (10) .

14. The processing machine as claimed in any one of claims 10 to 13, **characterised in that** the support elements (62) are secured by a releasable engaging joint (66), at least when they are in the unfolded or extended condition.

15. The processing machine as claimed in any one of claims 10 to 14, **characterised in that** pads for braking the movement of the sorting device (38) are disposed on the running faces (63) of the support elements (62).

## Revendications

1. Machine d'usinage destinée à usiner par séparation un matériau (8) en forme de plaque, pourvue d'une station d'usinage (5) dans laquelle l'usinage par séparation est effectuée par une tête d'usinage (7), et pourvue d'un porte-pièce (36) destiné à recevoir le matériau (8) en forme de plaque, et d'une station de chargement et de déchargement (10) disposée en dehors de la station d'usinage (5) et dans laquelle le porte-pièce (36) peut être déplacé, la station de chargement et de déchargement (10) présentant un dispositif de triage mobile (38) qui s'étend au moins en partie par-dessus le porte-pièce (36) et qui peut être déplacé au moins en partie le long dudit porte-pièce (36), et le dispositif de triage (38) présentant un pont (39) qui enjambe le porte-pièce (36) et qui est porté par deux trains de roulement (41) disposés respectivement sur chaque côté dudit pont (39), le dispositif de triage recevant une surface de dépôt (43) pour pièces usinées (24).

2. Machine d'usinage selon la revendication 1, **caractérisée en ce que** le porte-pièce (36) est formé sur une palette (11) qui peut être déplacée entre la station d'usinage (5) et la station de chargement et de déchargement (10).

3. Machine d'usinage selon l'une quelconque des revendications précédentes, **caractérisée en ce que** le train de roulement (41) présente des galets de roulement (52) ou des éléments de glissement, et **en ce que** ledit au moins un train de roulement (41) présente de préférence un dispositif de freinage (53) qui peut être actionné grâce à une main courante (45) disposée le long d'une face latérale du pont (39) ou grâce à un levier de frein (55) prévu sur le pont (39).

4. Machine d'usinage selon l'une quelconque des revendications 2 ou 3, **caractérisée en ce que** la palette (11) est reçue de manière déplaçable par un cadre de base (37) de la station de chargement et de déchargement (10), en particulier par le cadre de base (37) d'un changeur de palettes (13), et que le dispositif de triage (38) est guidé de manière déplaçable sur au moins un rail de guidage (51) ou le long de celui-ci, le rail de guidage (51) étant disposé sur le cadre de base (37) de manière contiguë à la palette (11), sur la palette (11) ou à même le sol le long d'une face longitudinale du cadre de base (37).

5. Machine d'usinage selon l'une quelconque des revendications précédentes, **caractérisée en ce que** la surface de dépôt (43) du pont (39) est délimitée par un bord (59) s'étendant au moins en partie le long de la face longitudinale de la surface de dépôt (43) et surélevé par rapport à ladite surface de dépôt (43) lequel présente en particulier une arête supérieure (60) arrondie, recourbée ou pourvue d'un protège-arête.

6. Machine d'usinage selon l'une quelconque des revendications précédentes, **caractérisée en ce que** la surface de dépôt (43) est prévue de manière fixe sur le pont (39) ou sur un support (58) pouvant être retiré du pont (39) ou **en ce que** la surface de dépôt (43) est réalisée en tant que train de rouleaux (69) pouvant être placé sur le pont (39) ou pouvant être disposé au niveau de celui-ci.

7. Machine d'usinage selon l'une quelconque des revendications précédentes, **caractérisée en ce qu'**une brosse (56) est disposée sur le pont (39) de manière contiguë au train de roulement (41).

8. Machine d'usinage selon l'une quelconque des revendications précédentes, **caractérisée en ce qu'**un récipient de transport (42) et/ou des dispositifs de serrage pour des outils auxiliaires sont disposés sur le pont (39).

9. Machine d'usinage selon l'une quelconque des revendications précédentes, pourvue d'un chariot de transport (48) lequel peut être positionné sur une face frontale de la machine d'usinage (2) ou sur une face frontale (46) de la station de chargement et de déchargement (10) située à l'opposé de la station d'usinage (5), et sur lequel peut être transféré le dispositif de triage (38).

10. Machine d'usinage selon l'une quelconque des revendications 1 à 8, **caractérisée en ce que** sur une face frontale de la machine d'usinage (2) ou sur une face frontale (46) de la station de chargement et de déchargement (10) située à l'opposé de la station d'usinage (5) est prévue au moins une plate-forme de dépôt (61) qui présente des éléments d'appui (62) pourvus de surfaces de roulement (63) sur lesquelles peut être transféré le dispositif de triage (38).

11. Machine d'usinage selon la revendication 10, **caractérisée en ce que** les éléments d'appui (62) sont disposés sur le cadre de base (3, 37) de la machine d'usinage (2) ou de la station de chargement et de déchargement (10) de manière pivotante, pliable ou insérable et peuvent passer d'une position pliée parallèlement à la face frontale (46) du cadre de base (3, 37) ou insérée dans ledit cadre de base (3, 37) à une position sortie ou dépliée dans laquelle les surfaces de roulement (63) des éléments d'appui (62) sont de niveau respectivement avec une surface de roulement contiguë (50) et/ou avec un rail de guidage contigu (51) se trouvant sur le cadre de base (3, 37).

12. Machine d'usinage selon la revendication 10 ou 11, **caractérisée en ce que** les éléments d'appui (62) présentent une butée frontale (64) qui limite une surface de roulement (63) des éléments d'appui (62) et présentent en particulier une butée latérale (65) qui, lorsque lesdits éléments d'appui (62) sont dans la position pliée, limitent une distance de déplacement du dispositif de triage (38) à l'extérieur du cadre de base (3, 37) de la machine d'usinage (2) ou de la station de chargement et de déchargement (10).

13. Machine d'usinage selon l'une quelconque des revendications 10 à 12, **caractérisée en ce que** les éléments d'appui (62) sont disposés sur le cadre de base (3, 37) de la machine d'usinage (2) ou de la station de chargement et de déchargement (10) de manière à pouvoir être réglés en hauteur.

14. Machine d'usinage selon l'une quelconque des revendications 10 à 13, **caractérisée en ce que** les éléments d'appui (62) sont sécurisés, au moins dans la position dépliée ou sortie, grâce à un assemblage à enclenchement (66) désenclenchable.

15. Machine d'usinage selon l'une quelconque des revendications 10 à 14, **caractérisée en ce que** des garnitures sont disposées sur les surfaces de roulement (63) des éléments d'appui (62) en vue de freiner le mouvement du dispositif de triage (38).
